# EUROPEAN PATENT SPECIFICATION

(11) **EP 2 680 148 B1**
(45) Date of publication and mention of the grant of the patent: **07.01.2015**
(21) Application number: 13173527.6
(22) Date of filing: 25.06.2013
(51) Int. Cl.: G06F 11/07, G06F 11/18, G06F 11/16

(54) **Information processing system, output control device, and data generating device**
Informationsverarbeitungssystem, Ausgangssteuerungsvorrichtung und Datenerzeugungsvorrichtung
Système de traitement d'informations, dispositif de commande de sortie et dispositif de génération de données

(30) Priority: 27.06.2012 JP 2012143677
(43) Date of publication of application: 01.01.2014
(73) Proprietor: Hitachi Ltd., Tokyo 100-8280 (JP)
(72) Inventor: Imamoto, Kenji, Chiyoda-ku, Tokyo 100-8220 (JP); Maekawa, Keiji, Chiyoda-ku, Tokyo 100- 8220 (JP); Katsuta, Keiichi, Chiyoda-ku, Tokyo 100- 8220 (JP); Shibata, Naoki, Chiyoda-ku, Tokyo 100- 8220 (JP); Sakai, Kenichi, Chiyoda-ku, Tokyo 100- 8220 (JP); Sakuyama, Hideo, Chiyoda-ku, Tokyo 100- 8220 (JP); Watanabe, Dai, Chiyoda-ku, Tokyo 100- 8220 (JP)
(74) Representative: Gill, Stephen Charles

(56) References cited:
- EP-A1- 1 104 735
- EP-A1- 1 857 936
- DE-A1-102009 005 266
- US-A1- 2009 259 885

## Description

### BACKGROUND OF THE INVENTION

### Field of the Invention

The present invention relates to an information processing system, an output control device, and a data generating device and, more particularly, to a system that applies multiplexing processing to input data and has a fail-safe property.

### Description of the Related Art

In a system strongly desired to guarantee safety, it is important to secure a fail-safe property. For example, in order to ensure safety of a train service, a signal safety device for a railway is required to have a characteristic for safely controlling a train even if some failure occurs in equipment configuring the signal safety device. Such a characteristic is called fail-safe property. A signal having the fail-safe property is configured to indicate a stop or reduce light when a failure of the signal occurs.

The idea of the fail-safe property has been used in various fields such as the automobile field. For example, in the railway field, the fail-safe property of the signal safety device has been guaranteed by a relay interlocking device in which a signal relay is used as a switch for control signal transmission and used as a basic element configuring a control logic. In recent years, the fail-safe property is realized by a multiplex system in which devices are multiplexed.

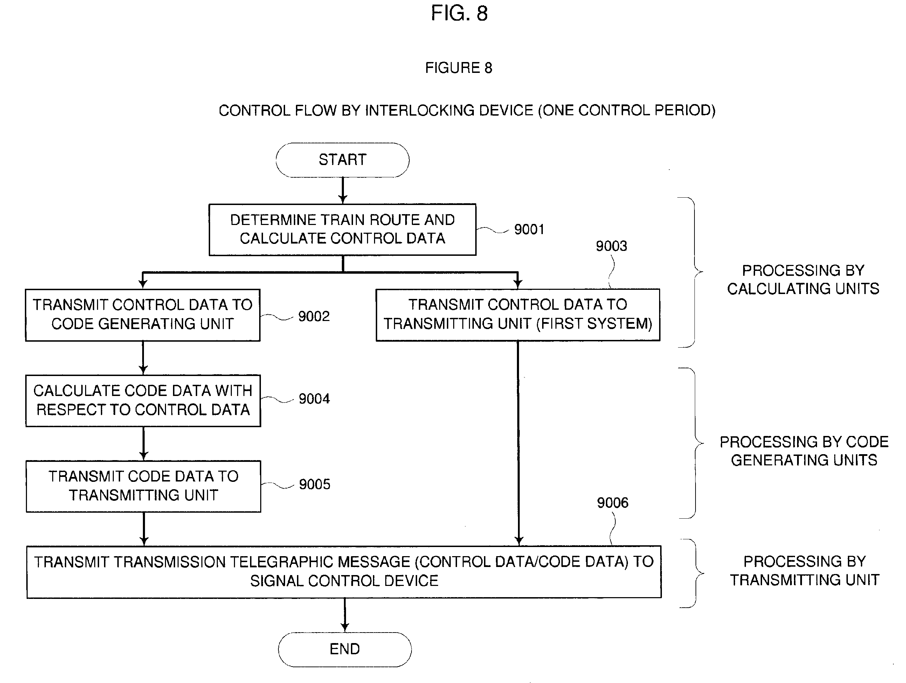

As a technique for using the multiplex system as a railway signal system, there is a technique disclosed in Japanese Patent Application Laid-Open Publication No. 2011-39630 (Patent Literature 1). Patent Literature 1 describes "for data amount reduction, a hash value (128 bits) calculated from a raw data by the CPU-B is transmitted instead of the raw data. In (2) of Figure 8, the CPU-A transmits both of data created by the CPU-A and data received from the CPU-B to the comparator using the general-purpose interface. In this example, for the data amount reduction, hash values of the data of the CPU-A and B are transmitted to the comparator instead of raw data. In (3) of Figure 8, the comparator compares the data (the hash values) from both the CPU-A and the CPU-B and, when the data coincide with each other, transmits a transmission permission to the CPU-A." (Japanese Patent Application Laid-Open Publication No. 2011-39630, paragraph [0019]).

As a technique for removing hardware for guaranteeing the fail-safe property on an interlocking device side including the multiplex system, there is a technique disclosed in Japanese Patent Application Laid-Open Publication No. 2004-302708 (Patent Literature 2). Patent Literature 2 describes that "The computers 2A, 2B, and 2C operate independently from each other. However, in order to check whether the operation of each of the computers is valid, the computer periodically transmits control data, which is a calculation result of the computer itself to the other computers using the data exchange communication path 3 and receives control data of the other computers. Each of the systems compares control data of a calculation result of the system itself and control data of calculation results of the other systems and determines whether data output to the outside is valid." (Japanese Patent Application Laid-Open Publication No. 2004-302708, paragraph [0021]).

The system that guarantees the fail-safe property using a multiplex system has a problem in that hardware such as the comparator for guaranteeing the fail-safe property is removed on the data generating device side that generates data from a plurality of systems and performs collation of the data. In the transmission of the multiplex system, there is a risk that the systems come physically close to one another to cause a crosstalk on at least one of the outputs side, the network, and the input side. If a crosstalk occurs, data of the systems may be overwritten or falsified. Therefore, the fail-safe property is not kept. Conventionally, in order to eliminate the risk of a crosstalk, a fail-safe hardware configuration without a cross talk has been designed and packaged consuming enormous time and labor. Therefore, the removal of the hardware configuration in which costs of enormous time and labor occur greatly contributes to simplification and a cost reduction for the multiplex system.

The above Patent Literature 1 describes the technique for transmitting the hash values instead of the raw data and comparing the hash values themselves in the multiplex system. In the transmitting device disclosed in Patent Literature 1, the comparator, which is hardware, is used in order to guarantee the fail-safe property.

The above Patent Literature 2 describes the technique for collating the processing results of the respective calculating units in the interlocking device and outputting the results to the signal control device. In the above Patent Literature 2, the calculating units have a collating function. Processing and a configuration for communicating the control data calculated by the respective calculating units among the calculating units each other are necessary. Further, collation information in Patent Literature 2 is information representing only collation results in the respective systems. Therefore, in order to verify that a communication error does not occur with respect to the control data on the communication path, it is necessary to separately adopt a multiplex configuration as described "concerning the control data, the control data itself is multiplexed and transmitted in order to guarantee communication contents at a high level" (Japanese Patent Application Laid-Open Publication No. 2004-302708, paragraph [0037]). For example, when a first system creates wrong control data and outputs the data as valid data and the first system disguises the control data received from a second system as control data of the first system and returns the control data of the second system, there is a risk that the wrong control data of the first system is used for control. It is assumed that processing and a configuration for preventing such risk are separately added.

Therefore, the present invention provides a system configuration in which, while the fail-safe property can be guaranteed, a fail-safe hardware configuration on a data generating device side that performs collation of data generated by the respective systems of a multiplex system can be removed and simplification and a cost reduction of a system can be attained.

Document EP1104735 A1 discloses a multiple system processor comprising processing units each receiving the same input, performing the same processing, and generating and outputting the processing results.

A given processing unit out of the processing units serves as a main processing unit, and the others as slave ones. The main processing unit comprises a collecting section for collecting the processing results outputted from the main and slave processing units and an output section for outputting the collected processing results to the controller.

### SUMMARY OF THE INVENTION

In order to address the above problem, for example, configurations according to aspects of the present invention are adopted.

This application includes a plurality of solutions for addressing the above problem. As an example of the solutions, there is provided an information processing system including at least two processing units configured to generate control data for controlling a control target apparatus on the basis of input data, the information processing system comprising: a processing unit of a first system configured to output control data of the first system generated on the basis of the input data; a processing unit of a second system configured to output code data of a second system encoded with an encoding algorithm peculiar to the second system with respect to control data of the second system generated on the basis of the input data; and a control unit configured to receive the control data of the first system and the code data of the second system, to generate second code collation data to be collated with the code data of the second system from the received control data of the first system according to the encoding scheme peculiar to the second system, verify the control data of the first system and the code data of the second system by collating the second code collation data and the code data of the second system, and to determine propriety of transmission of the control data of the first system to the control target apparatus on the basis of verification results of validity of the control data of the first system and the code data of the second system.

As another example, there is provided an output control device that receives control data from a data generating device including at least two processing units configured to generate the control data for controlling a control target apparatus on the basis of input data and controls the control target apparatus, the output control device comprising a control unit configured to receive control data of a first system generated on the basis of the input data and code data of a second system encoded with an encoding algorithm peculiar to the second system with respect to control data of the second system generated on the basis of the input data, to generate second code collation data, to be collated with the code data of the second system, from the received control data of the first system according to the encoding scheme peculiar to the second system, to verify the control data of the first system and the code data of the second system by collating the second code collation data and the code data of the second system, and to determine propriety of transmission of the control data of the first system to the control target apparatus on the basis of verification results of validity of the control data of the first system and the code data of the second system.

As yet another example, there is provided a data generating device including at least two processing units configured to generate control data for controlling a control target apparatus on the basis of input data, the data generating device transmitting the control data to an output control device that controls the control target apparatus, the data generating device comprising: a processing unit of a first system configured to output control data of the first system generated on the basis of the input data; and a processing unit of a second system configured to output code data of the second system encoded with an encoding algorithm peculiar to the second system with respect to control data of the second system generated on the basis of the input data, wherein the data generating device is arranged to generate second code collation data, to be collated with the code data of the second system, from the received control data of the first system according to the encoding scheme peculiar to the second system, to verify the control data of the first system and the code data of the second system by collating the second code collation data and the code data of the second system, and to determine propriety of transmission of the control data of the first system to the output control device on the basis of verification results of validity of the control data of the first system and the code data of the second system.

As yet another example, there is provided a data generating device including at least two processing units configured to generate control data for controlling a control target apparatus on the basis of input data, the data generating device transmitting the control data to a control device that controls the control target apparatus,
the data generating device comprising:
a processing unit of a first system configured to output dispersed code data of a first system encoded with an algorithm including dispersion information of the first system with respect to control data of the first system generated on the basis of the input data; and
a processing unit of a second system configured to output dispersed code data of the second system encoded with an algorithm including dispersion information of the second system with respect to control data of the second system generated on the basis of the input data,
wherein, when both of the dispersed code data of the first system and the dispersed code data of the second system are valid, the data generating device generates, using the dispersed code data of the first system and the dispersed code data of the second system, code data with which validity of the control data of the first system can be verified and transmits the code data and the control data of the first system to the control device
   determine propriety of transmission of the control data of the first system to the control target apparatus on the basis of verification results of validity of the control data of the first system and the code data of the second system.

According to the present invention, it is possible to provide a multiplex system in which a fail-safe mechanism on a data generating device side that performs collation of data generated by the respective systems of a multiplex system is removed and, while the fail-safe property is kept, simplification and a cost reduction of the system can be realized.

Problems, components, and effects other than those explained above are clarified by the following explanation of embodiments.

### BRIEF DESCRIPTION OF THE DRAWINGS

Figure 1 is a diagram showing an example of the configuration of an interlocking device and a signal control device according to a first embodiment of the present invention;
Figure 2 is a diagram showing a modification of the configuration of the interlocking device and the signal control device according to the first embodiment of the present invention;
Figure 3 is a diagram showing a modification of the configuration of the interlocking device and the signal control device according to the first embodiment of the present invention;
Figure 4 is a diagram showing a modification of the configuration of the interlocking device and the signal control device according to the first embodiment of the present invention;
Figure 5 is a diagram showing an example of the configuration of an interlocking device and a signal control device according to a second embodiment of the present invention;
Figure 6 is a diagram showing an example of the configuration of an interlocking device and a signal control device according to a third embodiment of the present invention;
Figure 7 is a diagram showing an example of the configuration of an interlocking device and a signal control device according to a fourth embodiment of the present invention;
Figure 8 is a flowchart showing a control flow in the interlocking device in the first embodiment of the present invention; and
Figure 9 is a flowchart showing a control flow in the signal control device in the first embodiment of the present invention.

### DETAILED DESCRIPTION OF THE PREFERRED EMBODIMENTS

Embodiments of the present invention are explained below with reference to the drawings. Note that the drawings are schematic.

### First Embodiment

In this embodiment, an interlocking device 1 including three calculating units is assumed as a multiplex information processing system. It is assumed that the interlocking device 1 is connected to a signal control device 2 via a network 4 and the signal control device 2 is connected to a signal apparatus 3. The present invention can also be configured by a double system including a first system and a second system or a multiplex system including three or more systems. The multiplex information processing system applied with the present invention is not limited to a signal apparatus in a railway and may be applied to various apparatuses with the signal control device 2 and the signal apparatus 3 respectively read as an output control device and a control target apparatus. Similarly, the interlocking device 1 can be read as a data generating device that generates control data for controlling the control target apparatus from input data. Further, the output control device and the data generating device do not need to be separately provided. A section that performs verification of a code and output control for data in the output control device only has to be set somewhere on the multiplex information processing system as a control unit.

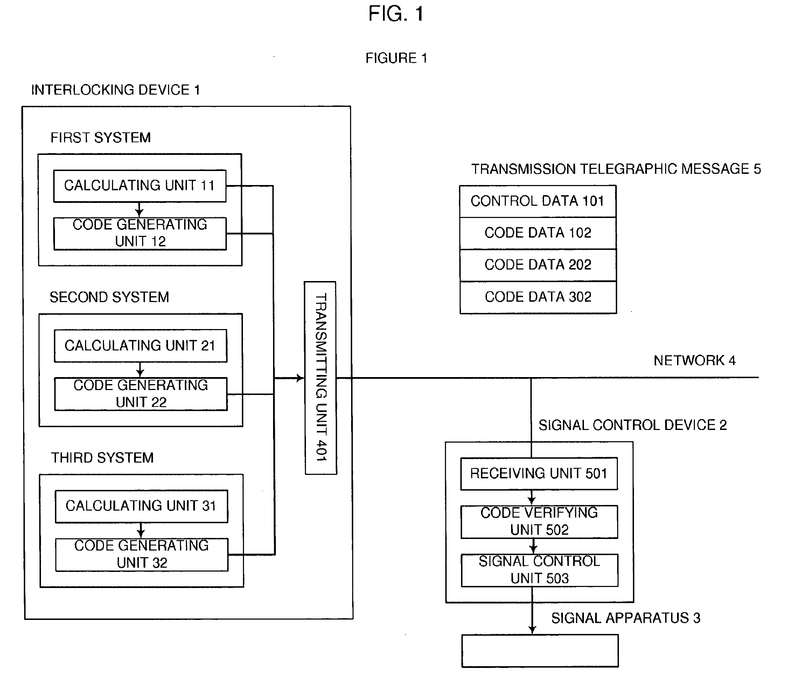

The configuration of this embodiment is shown in Figure 1. In this embodiment, the interlocking device 1 includes three information processing systems (hereinafter respectively referred to as first system, second system, and third system). The respective systems include calculating units (11, 21, and 31) configured to calculate control data for the signal control device 2 and code generating units (12, 22, and 32) configured to receive, as inputs, the control data output by the calculating units and output error detection codes. The interlocking device 1 includes a transmitting unit 401 configured to transmit a transmission telegraphic message 5 calculated in the interlocking device 1 to the network 4. The code generating units (12, 22, and 32) of the respective systems and the calculating unit 11 of the first system are connected to the transmitting unit 401. The signal control device 2 includes a receiving unit 501 configured to receive the transmission telegraphic message 5 transmitted by the interlocking device 1 via the network 4, a code verifying unit 502 configured to verify consistency of control data 101 included in the transmission telegraphic message 5 and code data (102, 202, and 302), which are error detection codes calculated by the respective systems, a signal control unit 503 configured to control the signal apparatus 3 on the basis of the control data 101. Sections that perform processing in the respective systems are processing units. In this embodiment, the processing units include calculating units and code generating units. However, when code generation is unnecessary in the processing in the systems, the processing units do not have to include the code generating units.

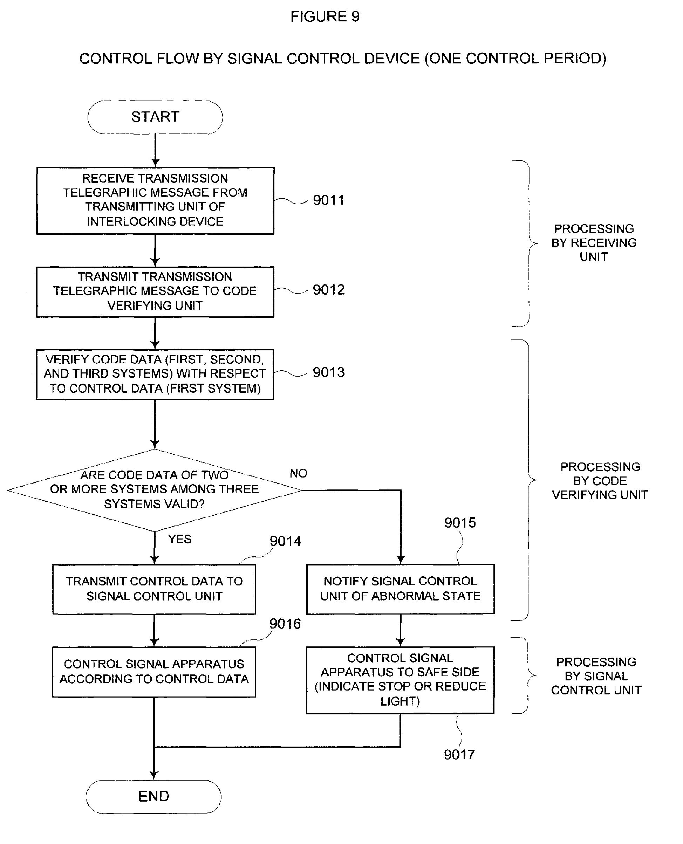

Figure 8 shows a control flow by the interlocking device 1 according to this embodiment. Figure 9 shows a control flow by the signal control device 2 according to this embodiment. Flows of signal control in the interlocking device 1 and the signal control device 2 are explained below.

First, the calculating units of the respective systems of the interlocking device 1 determine, on the basis of the interlocking logic, routes of respective trains according to on-rail states of the trains, calculate control data for controlling the signal apparatus 3 set in a station premise (9001), and transmit the control data to the code generating units of the own systems (9002). The calculating unit 11 of the first system transmits the control data 101 to the transmitting unit 401 (9003).

Subsequently, the code generating units of the respective systems calculate error detection codes with respect to the control data received from the calculating units (9004) and transmit the error detection codes to the transmitting unit 401 as code data (9005).

The error detection codes mentioned above are information for detecting a communication error such as a deformed bit that occurs in transmitted data on a communication path. The code generating units include an algorithm for generating the error detection code. For example, a parity code, a check sum, a cyclic redundancy check (CRC), and a hash function are used. In the explanation in this embodiment, the cases of using the error detection code is mentioned. However, as error correction codes for enabling detection and correction of an error, for example, a cyclic hamming code, a Reed-Solomon code, and the like can also be used.

The error detection codes are peculiar to the respective systems. The error detection codes have a characteristic that, even when the calculating units abnormally operate, the error detection codes of the other systems cannot be calculated. This characteristic is realized by the respective systems using, as code generation algorithms, CRCs in which different polynomials are used or setting, as inputs of hash functions, data obtained by adding information unique to the respective systems to the control data. Alternatively, the characteristic can also be realized by a scheme for adding information (identification information, secret information, and the like) unique to the respective systems to the control data and calculating codes with respect to the information. Different algorithms and different encoding schemes may be used in the respective systems (e.g., a CRC is used in the first system, a hash function is used in the second system, and a parity code is used in the third system). "Different algorithms, different encoding schemes, peculiar algorithms, and peculiar encoding schemes" in this embodiment mean that "outputs are different with respect to the same input". Therefore, even if types of algorithms and encoding systems themselves are the same, when peculiar output results are obtained with respect to inputs according to setting of coefficients and the like, the algorithms and the encoding systems mean the "different algorithms, different encoding schemes, peculiar algorithms, and peculiar encoding schemes".

The transmitting unit 401 transmits the code data (102, 202, and 302) received from the code generating units of the respective systems and the control data 101 received from the calculating unit 11 of the first system to the signal control device 2 as the transmission telegraphic message 5 (9006). In the explanation in this embodiment, these data are collected as one telegraphic message. However, if the control is not affected, the respective data may be separately transmitted to the signal control device 2.

In order to prevent a permanent fault of code data, even if control contents are the same, values of the code data may be given a characteristic that the values can be changed for each of control periods. This is realized by, for example, including a serial number of each of the control periods in a code calculation. Consequently, even when the transmitting unit 401 breaks down and transmits the control data 101 and the code data (102, 202, and 302) in the past to the signal control device 2, it is detected through a serial number check that the code data are values in the past. The transmitted data are discarded as invalid control data 101.

Naturally, if the risk of overwriting in the respective systems is not taken into account, the same code generation algorithm may be used in the respective systems or, depending on a degree of correspondence to the permanent fault of the code data, the values of the code data may be continuously used for a fixed period or the same encoding scheme may be continuously used for a constant multiple of the control period.

Upon receiving the transmission telegraphic message 5 from the transmitting unit 401 of the interlocking device 1 (9011), the receiving unit 501 of the signal control device 2 transmits the control data 101 and the code data to the code verifying unit 502 (9012).

The code verifying unit 502 verifies, using the code data (102, 202, and 302) of the three systems received from the receiving unit 501, whether there is an error in the control data 101 calculated by the calculating unit 11 of the first system (9013). When an error is not detected in the control data 101 of the first system in verification of code data of at least two or more systems, the code verifying unit 502 determines that there is no error in the control data 101 and transmits the control data 101 to the signal control unit 503 (9014). When errors are detected in verification of code data in two or more systems, the code verifying unit 502 determines that there is an error in the control data 101, does not permit transmission of the control data 101 to the signal control unit 503, and notifies the signal control unit 503 of an abnormal state (9015).

The verification of the control data performed using the code data is explained. The code verifying unit 502 knows respective encoding schemes in the code generating units (12, 22, and 32) and generates, from the received control data 101, according to the encoding schemes peculiar to the respective systems, data for code collation to be collated with the respective code data. The code verifying unit 502 performs verification of the control data and the respective code data by collating the respective data for code collation and the code data (102, 202, and 302) of the systems corresponding to the data for code collation. The encoding schemes used by the code generating units may be registered in the code verifying unit 502 in advance or the code verifying unit 502 and the code generating unit (12, 22, and 32) may share the encoding systems by performing communication between the transmitting unit 401 and the receiving unit 501 or may use other radio transmission schemes. As a method of finding the corresponding systems, the positions of the respective code data may be described in header information or consistency and inconsistency of the respective data for code collation and the respective code data may be determined in a round robin manner.

In this embodiment, the code verifying unit 502 performs error detection processing three times in total using the three code data calculated by the three systems. That is, the code verifying unit 502 performs error detection processing using the code data 102 of the first system with respect to the control data 101 of the first system, error detection processing using the code data 202 of the second system with respect to the control data 101 of the first system, and error detection processing using the code data 302 of the third system with respect to the control data 101 of the first system. Since the codes unique to the respective systems are used, the code verifying unit 502 applies code verification algorithms corresponding to the respective systems. Even when an error is detected in the error detection processing using the code data of the first system, if an error is not detected in the other two systems, the code verifying unit 502 determines that there is no error in the control data 101 of the first system. When it is determined that the code of one system is invalid, the code verifying unit 502 determines that a miscalculation of the calculating unit or the code generating unit of the system or a communication error on the communication path occurs. This information is desirably recorded, for maintenance, in the interlocking device 1 or the signal control device 2 as an error log or notified to a customer engineer or a maintenance facility.

Upon receiving the control data 101 from the code verifying unit 502, the signal control unit 503 controls the signal apparatus 3 according to the control data 101 (9016). When an abnormality is notified from the code verifying unit 502, the signal control unit 503 controls the signal apparatus 3 to a safe side (indicates a stop, reduces light, or the like) (9017).

The following explanation indicates that, in respective processing procedures carried out by the interlocking device 1, the safety of the signal apparatus 3 is secured even when it is assumed that abnormal processing occurs. Additionally, when the signal control device 2 does not receive an effective telegraphic message from the interlocking device 1 for a fixed time, the signal control device 2 controls the signal apparatus 3 to the safe side.

First, a processing procedure taken when the calculating unit 11 of the first system abnormally operates is explained. As the abnormal operation of the calculating unit 11 of the first system, situations in which "wrong control data 101 is transmitted to the transmitting unit 401 or the code generating unit 12" and "the control data 101 is not transmitted to the transmitting unit 401 or the code generating unit 12" are assumed. When the first system transmits the wrong control data 101, the code data 102 is calculated on the basis of the control data 101 and the wrong control data 101 and the code data 102 are transmitted to the code verifying unit 502 of the signal control device 2. The signal control device 2 verifies the wrong control data 101 and the code data 102 of the first system and the code data (202 and 302) received from the other systems (the second system and the third system). In this case, the verification of the control data 101 of the first system and the code data 102 of the first system may be regarded as valid. However, since the valid calculating units of the second and third systems calculate control data different from the control data 101 of the first system and the code data (202 and 302) are calculated with respect to the control data, the verification of the code data (202 and 302) of the second and third systems performed using the control data 101 of the first system is regarded as invalid. Therefore, the signal control device 2 regards this as an abnormality of the control data 101, notifies the signal control unit 503 of the abnormality, and controls the signal apparatus 3 to the safe side. When the first system does not transmit the control data 101, after confirming that an effective telegraphic message is not received for a fixed period, the signal control device 2 controls the signal apparatus 3 to the safe side.

A processing procedure taken when the calculating unit 21 of the second system abnormally operates is explained. As the abnormal operation of the calculating unit 21 of the second system, a situation in which "wrong control data is transmitted to the code generating unit 22" is assumed. When the second system transmits the wrong control data to the code generating unit 22, the code data 202 is calculated based on the control data and transmitted to the code verifying unit 502 of the signal control device 2. The signal control device 2 verifies the control data 101 of the first system, the wrong code data 202 of the second system, and the code data (102 and 302) received from the other systems (the first system and the third system). In this case, the verifications of the control data 101 of the first system and the code data (102 and 302) of the first and third systems are regarded as valid. However, the verifications of the control data 101 of the first system and the code data 202 of the second system are regarded as invalid. Therefore, the signal control device 2 can regard the code data 202 of the second system abnormal and control the signal apparatus 3 on the basis of the control data 101. An abnormal operation of the calculating unit 31 of the third system is the same as the abnormal operation of the calculating unit 21 of the second system. Therefore, explanation thereof is omitted.

A processing procedure taken when the code generating unit of the first, second, or third system abnormally operates is explained. As the abnormal operation of the code generating units (12, 22, and 32), situations in which "wrong code data is transmitted to the transmitting unit 401" and "code data is not transmitted to the transmitting unit 401" are assumed. When one system calculates wrong code data (102, 202, or 302), the wrong code data is transmitted to the code verifying unit 502 of the signal control device 2. The signal control device 2 verifies the control data 101 of the first system, the wrong code data of the one system, and proper code data received from the other two systems. In this case, the verification of the control data 101 of the first system and the proper code data of the two systems are regarded as valid. However, the verification of the control data 101 of the first system and the wrong code data of the one system is regarded as invalid. Therefore, the signal control device 2 regards this as an abnormality of the wrong code data of the one system and controls the signal apparatus 3 on the basis of the control data 101 of the first system. When the code generating unit of one system does not transmit code data, if the signal control device 2 has received the control data 101 and code data of the other two systems, the signal control device 2 can control the signal apparatus 3 on the basis of the control data 101.

Lastly, a processing procedure taken when the transmitting unit 401 abnormally operates is explained. As the abnormal operation of the transmitting unit 401, situations in which "the control data 101 or code data of the respective systems is changed and transmitted" and "the transmission telegraphic message 5 is not transmitted to the signal control device 2" are assumed. When the control data 101 is rewritten, as in the case of the calculation of the wrong control data 101, which is one of the abnormal operations of the first system, the control data 101 is detected when the signal control device 2 performs code verification. When a situation in which code data of the second system is overwritten with code data of the first system is assumed as the rewriting of the code data of the respective systems, the code verifying unit 502 uses different code verification algorithms for the code data of the respective systems. Therefore, when the code data is overwritten, the code verifying unit 502 regards the code data as an invalid code.

In this configuration, if one system in the interlocking device 1 can generate codes of the other systems when the one system is abnormal, the signal control device 2 may control the signal apparatus 3 to a dangerous side. For example, if one system abnormally operates, calculates wrong control data 101, further calculates code data of own system and the other systems, and transmits the control data 101 and the code data to the signal control device 2, the code verifying unit 502 of the signal control device 2 may overlook an error of the control data 101 and control the signal apparatus 3 on the basis of the wrong control data 101. Therefore, in this configuration, it is important that the interlocking device 1 has a characteristic that, even if one system abnormally operates, the system cannot calculate (falsify) code data of the other systems. When the interlocking device 1 has this characteristic, for example, even if communication lines from the respective systems to the transmitting unit 401 cause a fault contact and code data of the other systems are overwritten, it is possible to detect an abnormality by verifying the code data.

In order to prevent failures of the interlocking device 1 and the signal control device 2 from becoming latent, a failure diagnosis through periodical input of wrong control data or wrong code data may be performed. For example, the calculating unit 11 of the first system of the interlocking device 1 may periodically calculate the wrong control data 101 for a diagnosis to check whether the code verifying unit 502 of the signal control device 2 would correctly detect and notify the invalidity. Information indicating that calculated control data is wrong control data may be given to the code verifying unit 502, whereby one of the first system and the second system or both the first and second systems may output the wrong control data. The signal control device 2 may include a not-shown alarm device to output an alarm when the signal control device 2 detects invalidity.

Preferably, any one of a monitor and means for reporting a processing situation by sound or both are provided in any one of the interlocking device 1, the signal control device 2, the signal apparatus 3, and the network 4. This makes it easy to check processing situations in the interlocking device 1 or the signal control device 2.

In this embodiment, safety is secured on the basis of a presumption that a probability of a simultaneous same failure of the plurality of systems in the interlocking device 1 is low. Therefore, there is a demand for measures for reducing a probability of a simultaneous same failure of the plurality of system due to a power supply voltage abnormality, an EMC, a temperature change, or the like. Therefore, for example, it is desirable that the respective systems are packaged in separate pieces of hardware. The processing systems in the interlocking device 1 do not always need to be collected in one place as long as control is not affected. For example, the processing systems may be arranged in physically different places.

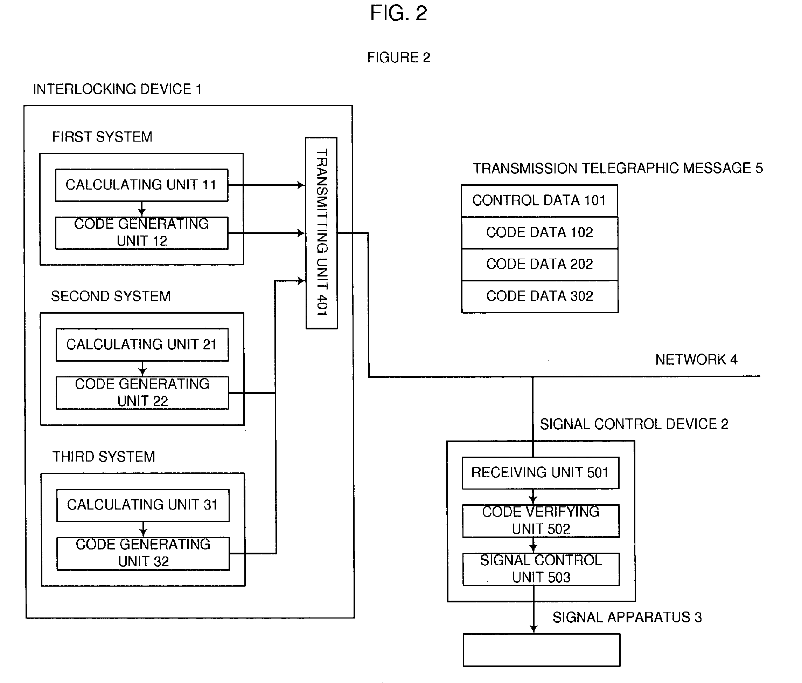

As explained above, an abnormality is detected by the code verifying unit 502 as long as two or more systems do not abnormally operate. Therefore, even if any one of the systems and the transmitting unit 401 in the interlocking device 1 simultaneously break down, since safety is not affected, the system configuration may be simplified by including the transmitting unit 401 in any one of the systems. This configuration is shown in Figure 2.

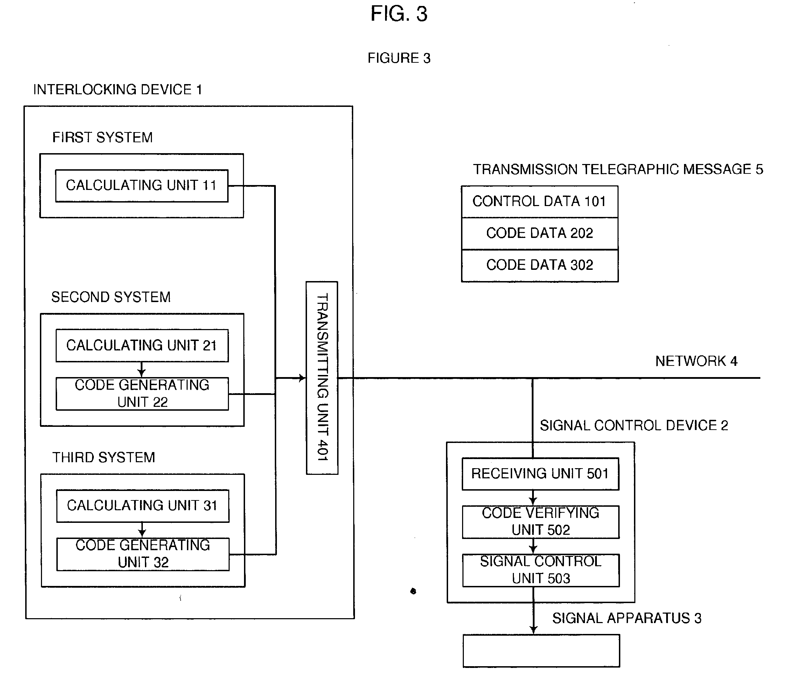

What is important in this embodiment is that, whereas the code data (102, 202, and 302) are respectively generated from the respective control data of the calculating units 11, 21, and 31, the data for code collation generated by the code verifying unit 502 is generated on the basis of the control data 101 from the calculating unit 11. The code generating unit and the code verifying unit use the same encoding algorithm for systems corresponding thereto. However, for example, in the code data 202 and the data for code collation 2502, systems of control data before being encoded are different (the code data 202 is derived from the second system and the data for code collation 2502 is derived from the first system). Therefore, for example, in the code verifying unit 502, when the control data 101 itself is invalid, collation is not established between the code data 202 (derived from the second system) and the data for code collation 2502 (derived from the first system) and between the code data 302 (derived from the third system) and the data for code collation 3502 (derived from the first system) and a deficiency of the system can be found. Therefore, in guaranteeing the fail-safe property, collation of the code data 102 (derived from the first system) and the data for code collation 1502 (derived from the first system), which are derived from the same system, does not always have to be performed. This configuration is shown in Figure 3. In Figure 3, it is possible to reduce the code generating units and further simplify the system. The code verifying unit 502 collates the control data 101 and the code data 202 and 302 and, if at least one of the code data is valid, may determine that the control data 101 is valid. However, when the code verifying unit 502 collates the code data 102 and the data for code collation 1502 as shown in Figure 1, the code verifying unit 502 can also determine whether a deficiency occurs in the interlocking device 1 or a deficiency occurs between the network 4 and the signal control device 2.

The code verification may be performed anywhere on the system, the transmission side, the network, and the reception side as long as verification of control data, which is a candidate of data for controlling the signal apparatus 3, and code data calculated from control data different from the control data can be performed. For example, if the code verification is performed on the transmission side, the transmission side device can output reliable code data.

It is effective to properly use the code generation algorithm in use according to a communication environment. In a communication environment in which a communication path error is little and access by an outsider is difficult such as the network 4, which is a wired network exclusive for a railway, an algorithm that is simply packaged and high in speed can be used. On the other hand, in a communication environment in which access by an outsider is easy such as a general-purpose radio network, there is a demand for an algorithm having high intensity in terms of coding such as a hash function in which a secret key is used.

In the configuration explained above, the calculating unit 11 of the first system transmits the control data 101 to the transmitting unit 401. However, in order to improve reliability against a communication error, control data may be transmitted from the plurality of systems.

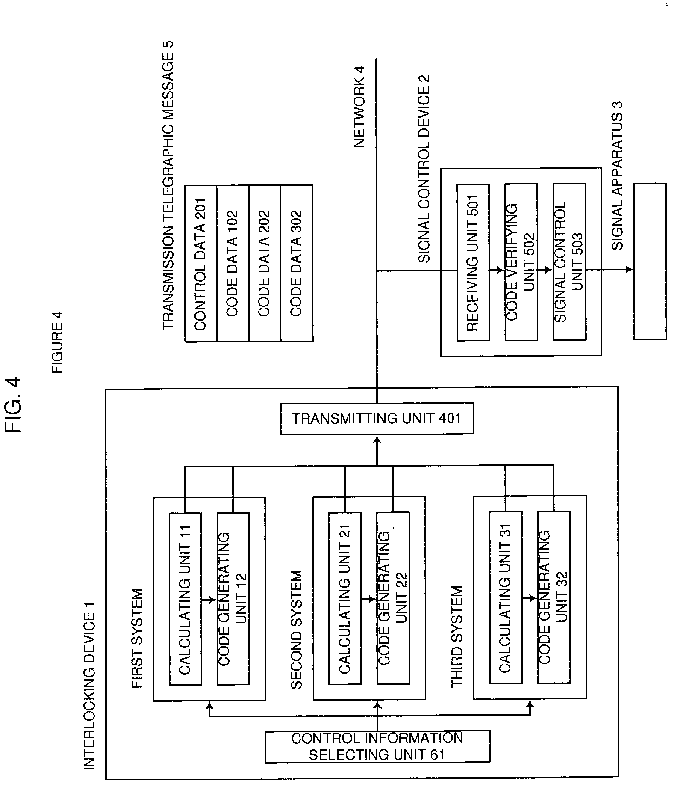

As shown in Figure 4, a control information selecting unit 61 may be added to control a method of selecting control data. For example, the control information selecting unit 61 makes it possible to select, out of control data of the respective systems, control data output to the transmitting unit 401 at every control period or at every fixed period. As the selecting method, the control data may be selected at random or may be selected in order from the respective systems. The control information selecting unit 61 makes it easy to find a latent failure of the calculating units (11, 21, and 31) of the respective systems. Naturally, if a function for allowing the transmitting unit 401 and the respective systems to perform transmission and reception each other is given to the interlocking device 1, the transmitting unit 401 can select control information.

In this embodiment, the fail-safe mechanism on the interlocking device side is omitted. Naturally, when a configuration is adopted in which the interlocking device side directly transmits data in parallel without collecting the data from the multiplex systems, the configuration of this embodiment may be adopted on the network or on a receiving device side. That is, the signal control device 2 or an onboard logical unit may adopt this configuration.

### Second Embodiment

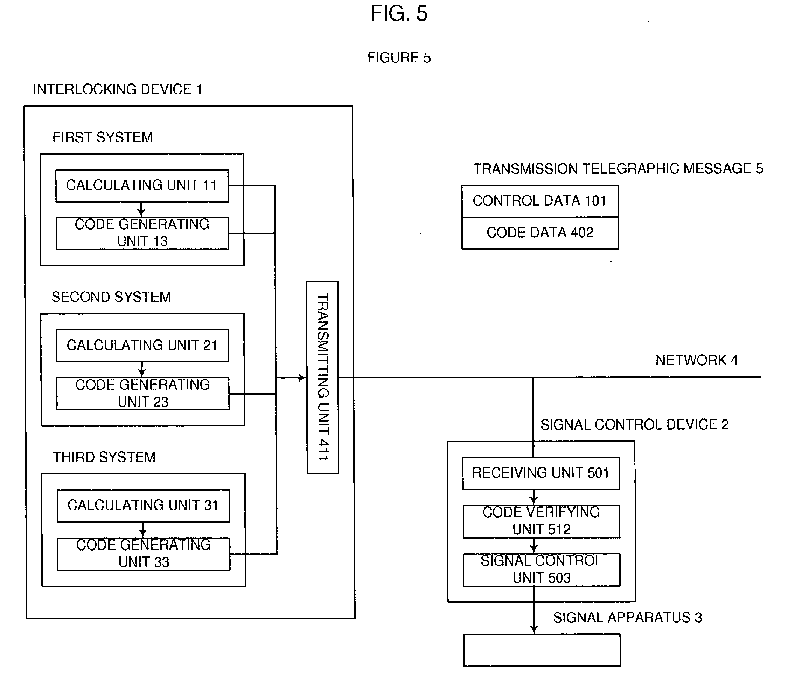

In an example explained in this embodiment, a transmitting unit 411 in the interlocking device 1 generates one error detection code data 402 on the basis of data calculated by code generating units (13, 23, and 33) of respective systems and transmits the control data 101 and the generated error detection code data 402 to the signal control device 2. Figure 5 is a configuration in the second embodiment. The interlocking device 1, the signal control device 2, the signal apparatus 3, the network 4, and the transmission telegraphic message 5 correspond to those in the first embodiment and have the same configurations unless specifically noted otherwise.

As a scheme of forming verifiable one code data from code data received from a plurality of systems, for example, secret function dispersion can be applied. The secret function dispersion is a method of dispersing a secret function to a plurality of systems (i) and encoding the secret function. In the secret function dispersion, to calculate an output (Vᵢ) with respect to an input (X) of a function (F), the respective systems perform a calculation Vᵢ=F(Wᵢ, X) for the input using respective kinds of dispersion information (Wᵢ) retained by own systems and obtain calculation results from a fixed number or more systems, whereby the output is calculated. When functions themselves for calculation by the respective systems have dispersion information, the above calculation may be Vᵢ=Fᵢ(X). A correct output (V) can be decoded by collecting a fixed number or more of the outputs (Vᵢ).

In this embodiment, for example, an error detection code generation algorithm is used as a secret function. The function is dispersed and stored by the code generating units (13, 23, and 33) of the respective systems. The code generating units receive control data as an input and output dispersed code data encoded by an algorithm including respective kinds of dispersion information to the transmitting unit 411. The transmitting unit 411 generates one error detection code data 402 for the control data 101 on the basis of the received dispersed code data of the plurality of systems and transmits the error detection code data 402 to the signal control device 2.

The error detection code data 402 has a characteristic that, when a fixed number or more of the dispersed code data, which are the calculation results from the respective systems, are not correct, the error detection code data 402 is not correctly output. In this embodiment, there are three systems. Therefore, the transmitting unit 411 may be set to be capable of calculating the error detection code data 402 when all the three systems can output correct dispersed code data or may be set to be capable of calculating the error detection code data 402 when at least two systems can output correct dispersed code data.

A code verifying unit 512 in the signal control device 2 includes an algorithm for verifying an error detection code thereof and determines validity of codes. In this configuration, even if the transmitting unit 411 breaks down and abnormally operates, effective error detection code data 402 cannot be calculated unless dispersed code data is obtained from the respective systems. Therefore, even when the transmitting unit 411 breaks down, wrong control data 101 and effective error detection code data 402 corresponding thereto cannot be calculated. Thus, safety for the signal control device 2 is kept. If a fixed number or more of dispersed code data from the respective systems are not correct, since the error detection code data 402 also include an error, the error verifying unit 52 can detect an abnormality. Consequently, it is unnecessary to transmit a plurality of code data to the signal control device 2. Therefore, the code verifying unit 512 in the signal control device 2 does not need to include a plurality of code verification algorithms and only has to include an encoding algorithm for the error detection code data 402.

In the second embodiment, as in the first embodiment, a method of selecting control data may be changed at every control period by giving the configuration of the interlocking device 1 shown in Figure 4 or the function for allowing the transmitting unit 411 and the respective systems to perform transmission and reception each other. Consequently, a permanent fault of the calculating units of the respective systems is easily found. Further, to further improve reliability, dispersion information in dispersing the algorithm for verifying an error detection code or the algorithm for verifying an error detection code may be changed at least at every control period.

### Third Embodiment

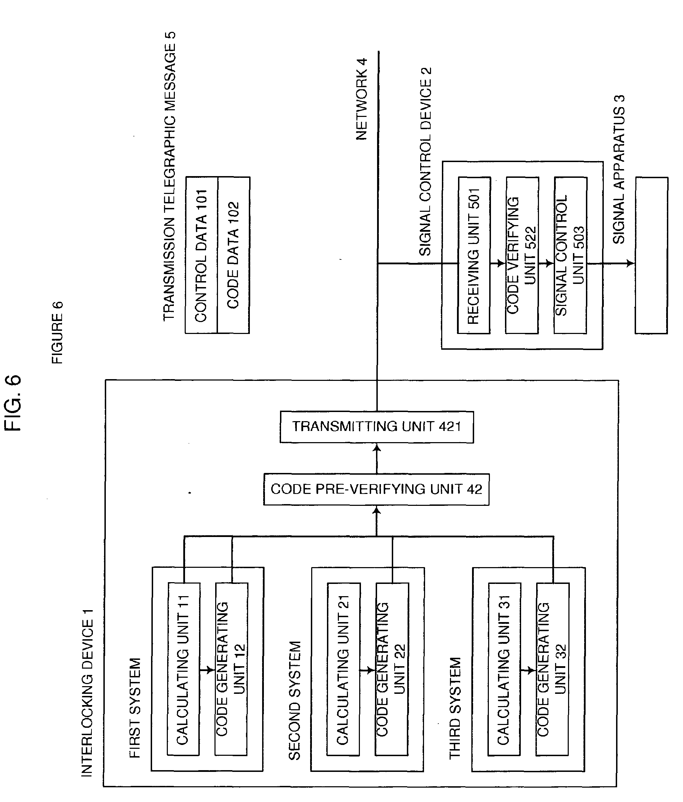

In an example explained in this embodiment, the interlocking device 1 includes a code pre-verifying unit 42. This configuration is shown in Figure 6. The interlocking device 1, the signal control device 2, the signal apparatus 3, the network 4, and the transmission telegraphic message 5 correspond to those in the first embodiment and have the same configurations unless specifically noted otherwise.

Verification of a code is performed by the code pre-verifying unit 42 before the control data 101 is transmitted to the signal control device 2, whereby it is possible to prevent wrong control data 101 from flowing out to the outside of the interlocking device 1. Consequently, compared with the first embodiment, it is possible to more quickly detect an abnormality of the control data 101, specify and eliminate a cause, and perform maintenance. Since verification of control data can be performed by the interlocking device 1, if the configuration of this embodiment is adopted, depending on the transmitter, it is possible to remove a fail-safe mechanism in the interlocking device and attain an effect of simplification and a cost reduction of the system while keeping the fail-safe property. When it is determined in the verification by the code pre-verifying unit 42 that the control data 101 is valid, the transmitting unit 421 outputs the control data 101 and the code data 102 to the signal control device 2. Verification of validity of control data and code data in the code pre-verifying unit 42 only has to be performed by a method same as the method of the code verifying unit 502 in the first embodiment.

A code verification algorithm used by the code pre-verifying unit 42 in the interlocking device 1 desirably has a characteristic that code verification can be performed but code generation cannot be performed. This characteristic is realized by using a verification algorithm used in electronic signatures such as an RSA signature, a DSA signature, and an elliptical ElGamal signature. By using the verification algorithm having this characteristic, even when the code pre-verifying unit 42 in the interlocking device 1 abnormally operates, since the code pre-verifying unit 42 cannot correctly calculate codes of the respective systems, even if the code pre-verifying unit 42 transmits wrong control data 101, the code verifying unit 522 of the signal control device 2 can detect an error of the control data 101. Further, at least one control data only has to be used for code verification. In this embodiment, the control data 101 is used.

When the code verification algorithm used by the above code pre-verifying unit 42 does not have the characteristic (i.e., when a verification algorithm for enabling code verification and code generation is used), the code pre-verifying unit 42 is required to have the fail-safe property during a failure of the code pre-verifying unit 42 in order to prevent wrong control data 101 and the code data 102 from being output. For example, the interlocking device 1 may have a configuration in which the code pre-verifying unit 42 is multiplexed and may adopt a scheme for collating kinds of processing of the multiplexed code pre-verifying units 42 and stopping operation when the kinds of processing are inconsistent.

In the first embodiment, the control data 101 of the first system and the code data of the respective systems are transmitted as the transmission telegraphic message 5. When the interlocking device 1 and the code pre-verifying unit 42 have the fail-safe property in this configuration, for example, the control data 101 of the first system and the code data 102 of the first system may be transmitted as the transmission telegraphic message 5. Consequently, a communication load between the interlocking device 1 and the signal control device 2 is reduced. The code verifying unit 522 does not need to include a plurality of code verification algorithms.

### Fourth Embodiment

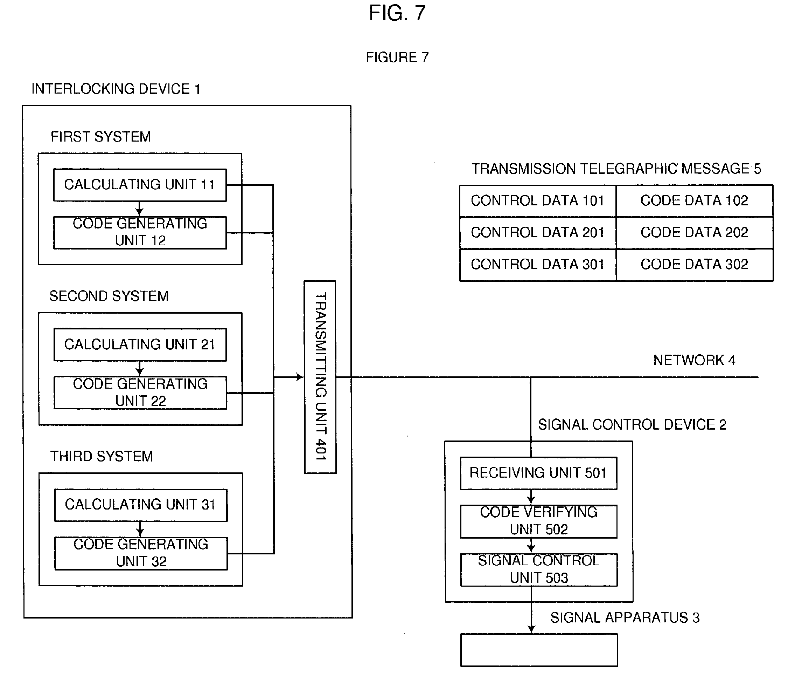

In an example in this embodiment, when control data is wrong, the control data is replaced with correct control data. Figure 7 shows a configuration in the fourth embodiment. The interlocking device 1, the signal control device 2, the signal apparatus 3, the network 4, and the transmission telegraphic message 5 correspond to those in the first embodiment and have the same configurations unless specifically noted otherwise.

Unlike the first embodiment, the respective systems transmit the control data (101, 201, and 301) and the code data (102, 202, and 302) to the transmitting unit 401 and the transmitting unit 401 generates the transmission telegraphic message 5 from the control data and the code data of the respective systems.

The code verifying unit 502 verifies validity of the control data 101 with respect to the code data (102, 202, and 302) of the respective systems and determines the validity of the control data 101. The determination of the validity only has to be performed in the same manner as the first embodiment. The code data 102 does not have to be used. When the code verifying unit 502 determines that the control data 101 is invalid, the code verifying unit 502 verifies validity of the control data 201 with respect to the respective code data. When the code verifying unit 502 determines that the control data 201 is valid, the code verifying unit 502 outputs the control data 201 instead of the control data 101. When the code verifying unit 502 determines that the control data 201 is invalid, the code verifying unit 502 verifies validity of the control data 301 and determines propriety of output of the control data 301 on the basis of the verification of the validity of the control data 301 in the same manner. Naturally, irrespective of the determination of the validity of the control data 101, the code verifying unit 502 may determine the validity of the control data 201 and the control data 301. When validity of a plurality of control data is verified and there are a plurality of control data determined as valid, at least any one of the control data determined as valid only has to be selected as control data transmitted to the signal control unit 503. When there is no control data that should be transmitted, it is determined that a communication error occurs on the system.

## Claims

1. An information processing system including at least two processing units (11, 21, 31) configured to generate control data for controlling a control target apparatus on the basis of input data, the information processing system comprising:
a processing unit (11) of a first system configured to output control data (101) of the first system generated on the basis of the input data;
a processing unit (22) of a second system configured to output code data (202) of a second system encoded with an encoding algorithm peculiar to the second system with respect to control data of the second system generated on the basis of the input data; and
a control unit configured to receive the control data of the first system and the code data of the second system, **characterized in that** said control unit is arranged to generate second code collation data to be collated with the code data of the second system from the received control data of the first system according to the encoding scheme peculiar to the second system, verify the control data of the first system and the code data of the second system by collating the second code collation data and the code data of the second system, and to determine propriety of transmission of the control data of the first system to the control target apparatus on the basis of verification results of validity of the control data of the first system and the code data of the second system.

2. The information processing system according to claim 1, wherein
the processing unit of the first system is configured to output code data of the first system encoded with an encoding algorithm peculiar to the first system with respect to the control data of the first system, and
the control unit is configured to receive the code data of the first system, to generate first code collation data to be collated with the code data of the first system according to the encoding scheme peculiar to the first system, to verify the control data of the first system and the code data of the first system by collating
the first code collation data and the code data of the first system, and to determine propriety of transmission of the control data of the first system to the control target apparatus on the basis of a pair of the verification results among the verification results of the validity of the control data of the first system and the code data of the second system and verification results of validity of the control data of the first system and the code data of the first system.

3. The information processing system according to claim 2, wherein when the two verification results among the verification results of the validity of the control data of the first system and the code data of the second system and the verification results of the validity of the control data of the first system and the code data of the first system are valid, the control unit is arranged to determine that the control data of the first system is valid and to transmit the control data of the first system to the control target apparatus.

4. The information processing system according to claim 2, wherein the control unit is arranged to receive the control data of the second system, to determine, on the basis of the verification results of the validity of the control data of the first system and the code data of the second system and verification results of validity of the control data of the second system and the code data of the first system, propriety of transmission of the control data of the first system to the control target apparatus and propriety of transmission of the control data of the second system to the control target apparatus, when either one of the control data is transmittable in the propriety of the transmission of the control data of the first system and the control data of the second system, to transmit the transmittable control data and, when both the two control data are transmittable, to enable selection of the control data to be transmitted.

5. The information processing system according to claim 2, wherein when the control unit does not permit the transmission of the control data of the first system, the control unit is arranged to receive the control data of the second system and to determine, on the basis of verification results of validity of the control data of the second system and the code data of the first system, propriety of transmission of the control data of the second system to the control target apparatus.

6. The information processing system according to any one of claims 1 to 5, wherein one of an encoding algorithm peculiar to the first system and the encoding algorithm peculiar to the second system or both can be changed at least every control period.

7. The information processing system according to any one of claims 1 to 6, wherein an encoding algorithm peculiar to the first system or the encoding algorithm peculiar to the second system is any one of a parity code, a check sum, a cyclic redundancy check, a hash function, a cyclic hamming code, and a Reed-Solomon code.

8. The information processing system according to any one of claims 1 to 7, wherein one of the processing unit of the first system and the processing unit of the second system or both output control data including wrong data, and when the control unit does not detect invalidity of the control data including the wrong data, determines that an abnormality occurs in the information processing system and outputs an alarm.

9. The information processing system according to any one of claims 1 to 8, further comprising one of a monitor configured to display at least one processing situation among generation of the control data, generation of the code data, and verification by the control unit, and means for reporting the processing situation by sound, or both of the monitor and the means.

10. The information processing system according to any one of claims 1 to 9, wherein the control target apparatus is a signal apparatus.

11. An output control device that receives control data from a data generating device including at least two processing units (11, 21, 31) configured to generate the control data for controlling a control target apparatus on the basis of input data and controls the control target apparatus,
the output control device comprising a control unit configured to receive control data (101) of a first system generated on the basis of the input data and code data (202) of a second system encoded with an encoding algorithm peculiar to the second system with respect to control data of the second system generated on the basis of the input data, **characterized in that** said output control device is arranged to generate second code collation data, to be collated with the code data of the second system, from the received control data of the first system according to the encoding scheme peculiar to the second system, to verify the control data of the first system and the code data of the second system by collating the second code collation data and the code data of the second system, and to determine propriety of transmission of the control data of the first system to the control target apparatus on the basis of verification results of validity of the control data of the first system and the code data of the second system.

12. The output control device according to claim 11, wherein the control target apparatus is a signal apparatus.

13. A data generating device including at least two processing units configured to generate control data for controlling a control target apparatus on the basis of input data, the data generating device transmitting the control data to an output control device that controls the control target apparatus,
the data generating device comprising:
a processing unit (11) of a first system configured to output control data of the first system generated on the basis of the input data; and
a processing unit of a second system (22) configured to output code data of the second system encoded with an encoding algorithm peculiar to the second system with respect to control data of the second system generated on the basis of the input data, **characterized in that**
the data generating device is arranged to generate second code collation data, to be collated with the code data of the second system, from the received control data of the first system according to the encoding scheme peculiar to the second system, to verify the control data of the first system and the code data of the second system by collating the second code collation data and the code data of the second system, and to determine propriety of transmission of the control data of the first system to the output control device on the basis of verification results of validity of the control data of the first system and the code data of the second system.

14. The data generating device according to claim 13, wherein the data generating device can perform verification of the code data of the second system but cannot perform generation of the code data or performs the verification of the code data of the second system using at least any one of an RSA signature, a DSA signature, and an elliptical ElGamal signature.

15. A data generating device including at least two processing units configured to generate control data for controlling a control target apparatus on the basis of input data, the data generating device transmitting the control data to a control device that controls the control target apparatus,
the data generating device comprising:
a processing unit (11) of a first system configured to output dispersed code data of a first system encoded with an algorithm including dispersion information of the first system with respect to control data of the first system generated on the basis of the input data; and
a processing unit (22) of a second system configured to output dispersed code data of the second system encoded with an algorithm including dispersion information of the second system with respect to control data of the second system generated on the basis of the input data,
**characterized in that** when both of the dispersed code data of the first system and the dispersed code data of the second system are valid, the data generating device generates, using the dispersed code data of the first system and the dispersed code data of the second system, code data with which validity of the control data of the first system can be verified and transmits the code data and the control data of the first system to the control device,to determine propriety of transmission of the control data of the first system to the control target apparatus on the basis of verification results of validity of the control data of the first system and the code data of the second system..

16. The data generating device of claim 15 wherein the data generating device makes it possible to change the algorithms including the dispersion information at least at every control period.

17. The data generating device according to any one of claims 13 to 16, wherein the control target apparatus is a signal apparatus.

## Patentansprüche

1. Informationsverarbeitungssystem mit wenigstens zwei Verarbeitungseinheiten (11, 21, 31), die dazu ausgelegt sind, Steuerdaten zum Steuern eines Steuerzielgeräts auf Grundlage von eingegebenen Daten zu erzeugen, wobei das Informationsverarbeitungssystem aufweist:
eine Verarbeitungseinheit (11) eines ersten Systems, die dazu ausgelegt ist, Steuerdaten (101) des ersten Systems auszugeben, die auf Grundlage der eingegebenen Daten erzeugt wurden,
eine Verarbeitungseinheit (22) eines zweiten Systems, die dazu ausgelegt ist, Codedaten (202) eines zweiten Systems auszugeben, die bezüglich der Steuerdaten des zweiten Systems, die auf Grundlage der eingegebenen Daten erzeugt wurden, mit einem für das zweite System speziellen Codieralgorithmus codiert sind, und
eine Steuereinheit, die dazu ausgelegt ist, die Steuerdaten des ersten Systems und die Codedaten des zweiten Systems zu empfangen,
**dadurch gekennzeichnet, dass** die Steuereinheit dazu ausgelegt ist, zweite Codeabgleichdaten zum Abgleichen mit den Codedaten des zweiten Systems aus den empfangenen Steuerdaten des ersten Systems gemäß dem für das zweite System speziellen Codierschema zu erzeugen, die Steuerdaten des ersten Systems und die Codedaten des zweiten Systems zu verifizieren, indem die zweiten Codeabgleichdaten und die Codedaten des zweiten Systems abgeglichen werden, und die Korrektheit der Übertragung der Steuerdaten des ersten Systems zu dem Steuerzielgerät auf Grundlage der Verifikationsergebnisse der Gültigkeit der Steuerdaten des ersten Systems und der Codedaten des zweiten Systems zu bestimmen.

2. Informationsverarbeitungssystem nach Anspruch 1, wobei
die Verarbeitungseinheit des ersten Systems dazu ausgelegt ist, Codedaten des ersten Systems auszugeben, die bezüglich der Steuerdaten des ersten Systems mit einem für das erste System speziellen Codieralgorithmus codiert sind, und
die Steuereinheit dazu ausgelegt ist, die Codedaten des ersten Systems zu empfangen, erste Codeabgleichdaten zu erzeugen, die mit den Codedaten des ersten Systems gemäß dem für das erste System speziellen Codierschema abzugleichen sind, die Steuerdaten des ersten Systems und die Codedaten des ersten Systems zu verifizieren, indem die ersten Codeabgleichdaten und die Codedaten des ersten Systems abgeglichen werden, und die Korrektheit der Übertragung der Steuerdaten des ersten Systems zu dem Steuerzielgerät auf Grundlage eines Paars von Verifikationsergebnissen unter den Verifikationsergebnissen der Gültigkeit der Steuerdaten des ersten Systems und der Codedaten des zweiten Systems und Verifikationsergebnissen der Gültigkeit der Steuerdaten des ersten Systems und der Codedaten des ersten Systems zu bestimmen.

3. Informationsverarbeitungssystem nach Anspruch 2, wobei wenn die zwei Verifikationsergebnisse unter den Verifikationsergebnissen der Gültigkeit der Steuerdaten des ersten Systems und der Codedaten des zweiten Systems und den Verifikationsergebnissen der Gültigkeit der Steuerdaten des ersten Systems und der Codedaten des ersten Systems gültig sind, die Steuereinheit dazu ausgelegt ist, zu bestimmen, dass die Steuerdaten des ersten Systems gültig sind, und die Steuerdaten des ersten Systems zu dem Steuerzielgerät zu übertragen.

4. Informationsverarbeitungssystem nach Anspruch 2, wobei die Steuereinheit dazu ausgelegt ist, Steuerdaten des zweiten Systems zu empfangen, auf Grundlage der Verifikationsergebnisse der Gültigkeit der Steuerdaten des ersten Systems und der Codedaten des zweiten Systems und der Verifikationsergebnisse der Gültigkeit der Steuerdaten des zweiten Systems und der Codedaten des ersten Systems die Korrektheit der Übertragung der Steuerdaten des ersten Systems zu dem Steuerzielgerät und die Korrektheit der Übertragung der Steuerdaten des zweiten Systems zu dem Steuerzielgerät zu bestimmen, wenn bei der Übertragung der Steuerdaten des ersten Systems und der Steuerdaten des zweiten Systems wenigstens einmal die Steuerdaten in Korrektheit übertragbar sind, die übertragbaren Steuerdaten zu übertragen und, wenn beide Steuerdaten übertragbar sind, die Auswahl der zu übertragenden Steuerdaten zu ermöglichen.

5. Informationsverarbeitungssystem nach Anspruch 2, wobei wenn die Steuereinheit die Übertragung der Steuerdaten des ersten Systems nicht erlaubt, die Steuereinheit dazu ausgelegt ist, die Steuerdaten des zweiten Systems zu empfangen und auf Grundlage der Verifikationsergebnisse der Gültigkeit der Steuerdaten des zweiten Systems und der Codedaten des ersten Systems die Korrektheit der Übertragung der Steuerdaten des zweiten Systems zu dem Steuerzielgerät zu bestimmen.

6. Informationsverarbeitungssystem nach einem der Ansprüche 1 bis 5, wobei ein für das erste System spezieller Codieralgorithmus und/oder der für das zweite System spezielle Codieralgorithmus wenigstens zu jeder Steuerperiode geändert werden können.

7. Informationsverarbeitungssystem nach einem der Ansprüche 1 bis 6, wobei ein für das erste System spezieller Codieralgorithmus oder der für das zweite System spezielle Codieralgorithmus ein Paritätscode, eine Prüfsumme, eine zyklische Redundanzprüfung, eine Hashfunktion, ein zyklischer Hammingcode oder ein Reed-Solomon-Code ist.

8. Informationsverarbeitungssystem nach einem der Ansprüche 1 bis 7, wobei die Verarbeitungseinheit des ersten Systems und/oder die Verarbeitungseinheit des zweiten Systems Steuerdaten mit Falschdaten ausgeben und, wenn die Steuereinheit die Ungültigkeit der Steuerdaten mit den Falschdaten nicht erfasst, bestimmen, dass eine Abnormität in dem Informationsverarbeitungssystem aufgetreten ist und einen Alarm ausgeben.

9. Informationsverarbeitungssystem nach einem der Ansprüche 1 bis 8, ferner mit einem Monitor, der dazu ausgelegt ist, wenigstens eine Verarbeitungssituation ausgewählt aus der Erzeugung der Steuerdaten, der Erzeugung der Codedaten und der Verifikation durch die Steuereinheit anzuzeigen, und/oder einer Einrichtung zum Berichten der Verarbeitungssituation durch Schall.

10. Informationsverarbeitungssystem nach einem der Ansprüche 1 bis 9, wobei das Steuerzielgerät ein Signalgerät ist.

11. Ausgabesteuervorrichtung, die Steuerdaten aus einer Datenerzeugungsvorrichtung empfängt, die wenigstens zwei Verarbeitungseinheiten (11, 21, 31) aufweist, die dazu ausgelegt sind, die Steuerdaten zum Steuern eines Steuerzielgeräts auf Grundlage von eingegebenen Daten zu erzeugen und das Steuerzielgerät zu steuern,
wobei die Ausgabesteuervorrichtung eine Steuereinheit aufweist, die dazu ausgelegt ist, Steuerdaten (101) eines ersten Systems zu empfangen, die auf Grundlage der eingegebenen Daten erzeugt wurden, und Codedaten (202) eines zweiten Systems, die bezüglich der Steuerdaten des zweiten Systems, die auf Grundlage der eingegebenen Daten erzeugt wurden, mit einem für das zweite Systems speziellen Codieralgorithmus codiert sind,
**dadurch gekennzeichnet, dass** die Ausgabesteuervorrichtung dazu ausgelegt ist, zweite Codeabgleichdaten zum Abgleichen mit den Codedaten des zweiten Systems aus den empfangenen Steuerdaten des ersten Systems gemäß dem für das zweite System speziellen Codierschema zu erzeugen, die Steuerdaten des ersten Systems und die Codedaten des zweiten Systems zu verifizieren, indem die zweiten Codeabgleichdaten und die Codedaten des zweiten Systems abgeglichen werden, und die Korrektheit der Übertragung der Steuerdaten des ersten Systems zu dem Steuerzielgerät auf Grundlage von Verifikationsergebnissen der Gültigkeit der Steuerdaten des ersten Systems und der Codedaten des zweiten Systems zu bestimmen.

12. Ausgabesteuervorrichtung nach Anspruch 11, wobei das Steuerzielgerät ein Signalgerät ist.

13. Datenerzeugungsvorrichtung mit wenigstens zwei Verarbeitungseinheiten, die dazu ausgelegt sind, Steuerdaten zum Steuern eines Steuerzielgeräts auf Grundlage von eingegebenen Daten zu steuern, wobei die Datenerzeugungsvorrichtung die Steuerdaten zu einer Ausgabesteuervorrichtung überträgt, die das Steuerzielgerät steuert,
wobei die Datenerzeugungsvorrichtung aufweist:
eine Verarbeitungseinheit (11) eines ersten Systems, die dazu ausgelegt ist, Steuerdaten des ersten Systems auszugeben, die auf Grundlage der eingegebenen Daten erzeugt wurden, und
eine Verarbeitungseinheit eines zweiten Systems (22), die dazu ausgelegt ist, Codedaten des zweiten Systems auszugeben, die bezüglich der Steuerdaten des zweiten Systems, die auf Grundlage der eingegebenen Daten erzeugt wurden, mit einem für das zweite System speziellen Codieralgorithmus codiert sind,
**dadurch gekennzeichnet, dass** die Datenerzeugungsvorrichtung dazu ausgelegt ist, zweite Codeabgleichdaten zum Abgleichen mit den Codedaten des zweiten Systems aus den empfangenen Steuerdaten des ersten Systems gemäß dem für das zweite System speziellen Codierschema zu erzeugen, die Steuerdaten des ersten Systems und die Codedaten des zweiten Systems zu verifizieren, indem die zweiten Codeabgleichdaten und die Codedaten des zweiten Systems abgeglichen werden, und die Korrektheit der Übertragung der Steuerdaten des ersten Systems zu der Ausgabesteuervorrichtung auf Grundlage der Verifikationsergebnisse der Gültigkeit der Steuerdaten des ersten Systems und der Codedaten des zweiten Systems zu bestimmen.

14. Datenerzeugungsvorrichtung nach Anspruch 13, wobei die Datenerzeugungsvorrichtung eine Verifikation der Codedaten des zweiten Systems durchführen kann, aber keine Erzeugung der Codedaten, oder die Verifikation der Codedaten des zweiten Systems unter Verwendung einer RSA-Signatur, einer DSA-Signatur und/oder einer elliptischen Elgamal-Signatur durchführt.

15. Datenerzeugungsvorrichtung mit wenigstens zwei Verarbeitungseinheiten, die dazu ausgelegt sind, Steuerdaten zum Steuern eines Steuerzielgeräts auf Grundlage von eingegebenen Daten zu steuern, wobei die Datenerzeugungsvorrichtung die Steuerdaten zu einer Steuervorrichtung überträgt, die das Steuerzielgerät steuert,
wobei die Datenerzeugungsvorrichtung aufweist:
eine Verarbeitungseinheit (11) eines ersten Systems, die dazu ausgelegt ist, verteilte Codedaten eines ersten Systems auszugeben, die bezüglich Steuerdaten des ersten Systems, die auf Grundlage der eingegebenen Daten erzeugt wurden, mit einem Verteilungsinformation des ersten Systems enthaltenden Algorithmus codiert sind, und
eine Verarbeitungseinheit (22) eines zweiten Systems, die dazu ausgelegt ist, verteilte Codedaten des zweiten Systems auszugeben, die bezüglich der Steuerdaten des zweiten Systems, die auf Grundlage der eingegebenen Daten erzeugt wurden, mit einem Verteilungsinformation des zweiten Systems enthaltenden Algorithmus codiert sind,
**dadurch gekennzeichnet, dass**, wenn sowohl die verteilten Codedaten des ersten Systems als auch die verteilten Codedaten des zweiten Systems gültig sind, die Datenerzeugungsvorrichtung unter Verwendung der verteilten Codedaten des ersten Systems und der verteilten Codedaten des zweiten Systems Codedaten erzeugt, mittels derer die Steuerdaten des ersten Systems verifiziert werden können, und die Codedaten und die Steuerdaten des ersten Systems zu der Steuervorrichtung überträgt, um die Korrektheit der Übertragung der Steuerdaten des ersten Systems zu dem Steuerzielgerät auf Grundlage der Verifikationsergebnisse der Gültigkeit der Steuerdaten des ersten Systems und der Codedaten des zweiten Systems zu bestimmen.

16. Datenerzeugungsvorrichtung nach Anspruch 15, wobei die Datenerzeugungsvorrichtung es ermöglicht, die die Verteilungsinformation enthaltenden Algorithmen wenigstens bei jeder Steuerperiode zu ändern.

17. Datenerzeugungsvorrichtung nach einem der Ansprüche 13 bis 16, wobei das Steuerzielgerät ein Signalgerät ist.

## Revendications

1. Système de traitement d'informations comportant au moins deux unités de traitement (11, 21, 31) configuré pour générer des données de commande pour commander un appareil cible de commande sur la base de données d'entrée, le système de traitement d'informations comportant :
une unité de traitement (11) d'un premier système configurée pour délivrer en sortie des données de commande (101) du premier système générées sur la base des données d'entrée,
une unité de traitement (22) d'un second système configurée pour délivrer en sortie des données de code (202) d'un second système codé à l'aide d'un algorithme de codage propre au second système par rapport à des données de commande du second système générées sur la base des données d'entrée, et
une unité de commande configurée pour recevoir les données de commande du premier système et les données de code du second système, **caractérisée en ce que** ladite unité de commande est conçue pour générer des secondes données de collecte de code à mettre en relation avec les données de code du second système à partir des données de commande reçues du premier système conformément au schéma de codage propre au second système, vérifier les données de commande du premier système et les données de code du second système en mettant en relation les secondes données de collecte de code et les données de code du second système, et pour déterminer la propriété de transmission des données de commande du premier système pour l'appareil cible de commande sur la base de résultats de vérification de validité des données de commande du premier système et des données de commande du second système.

2. Système de traitement d'informations selon la revendication 1, dans lequel
l'unité de traitement du premier système est configurée pour délivrer en sortie des données de code du premier système codées à l'aide d'un algorithme de codage propre au premier système par rapport aux données de commande du premier système, et
l'unité de commande est configurée pour recevoir les données de code du premier système, pour générer des premières données de collecte de code à mettre en relation avec les données de code du premier système conformément au schéma de codage propre au premier système, pour vérifier les données de commande du premier système et les données de code du premier système en mettant en relation les premières données de collecte de code et les données de code du premier système, et pour déterminer la propriété de transmission des données de commande du premier système pour l'appareil cible de commande sur la base d'une paire des résultats de vérification parmi les résultats de vérification de la validité des données de commande du premier système et des données de code du second système et des résultats de vérification de validité des données de commande du premier système et des données de code du premier système.

3. Système de traitement d'informations selon la revendication 2, dans lequel lorsque les deux résultats de vérification parmi les résultats de vérification de la validité des données de commande du premier système et des données de code du second système et les résultats de vérification de la validité des données de commande du premier système et des données de code du premier système sont valides, l'unité de commande est conçue pour déterminer que les données de commande du premier système sont valides et pour transmettre les données de commande du premier système à l'appareil cible de commande.

4. Système de traitement d'informations selon la revendication 2, dans lequel l'unité de commande est conçue pour recevoir les données de commande du second système, pour déterminer, sur la base des résultats de vérification de la validité des données commande du premier système et des données de code du second système et des résultats de vérification de validité des données de commande du second système et des données de code du premier système, la propriété de transmission des données de commande du premier système pour l'appareil cible de commande et la propriété de transmission des données de commande du second système pour l'appareil cible de commande, lorsque l'une ou l'autre des données de commande peut être transmise dans la propriété de transmission des données de commande du premier système et des données de commande du second système, pour transmettre les données de commande pouvant être transmises et, lorsque les données de commande peuvent être toutes les deux transmises, pour permettre la sélection des données de commande à transmettre.

5. Système de traitement d'informations selon la revendication 2, dans lequel lorsque l'unité de commande ne permet pas la transmission des données de commande du premier système, l'unité de commande est conçue pour recevoir les données de commande du second système et pour déterminer, sur la base de résultats de vérification de validité des données de commande du second système et des données de code du premier système, la propriété de transmission des données de commande du second système pour l'appareil cible de commande.

6. Système de traitement d'informations selon l'une quelconque des revendications 1 à 5, dans lequel l'un d'un algorithme de codage propre au premier système et de l'algorithme de codage propre au second système ou les deux peuvent être changés au moins à chaque période de commande.

7. Système de traitement d'informations selon l'une quelconque des revendications 1 à 6, dans lequel un algorithme de codage propre au premier système ou l'algorithme de codage propre au second système est l'un quelconque d'un code de parité, d'une somme de contrôle, d'un contrôle de redondance cyclique, d'une fonction de hachage, d'un code de Hamming cyclique et d'un code de Reed-Solomon.

8. Système de traitement d'informations selon l'une quelconque des revendications 1 à 7, dans lequel l'une de l'unité de traitement du premier système et de l'unité de traitement du second système ou les deux délivrent en sortie des données de commande comprenant des données erronées, et lorsque l'unité de commande ne détecte pas l'invalidité des données de commande comprenant les données erronées, détermine qu'une anomalie est survenue dans le système de traitement d'informations et délivre en sortie une alarme.

9. Système de traitement d'informations selon l'une quelconque des revendications 1 à 8, comportant en outre l'un d'un moniteur configuré pour afficher au moins une situation de traitement parmi la génération des données de commande, la génération des données de code, et la vérification par l'unité de commande, et des moyens pour reporter la situation de traitement par l'intermédiaire de sons, ou à la fois du moniteur et des moyens.

10. Système de traitement d'informations selon l'une quelconque des revendications 1 à 9, dans lequel l'appareil cible de commande est un appareil de signalisation.

11. Dispositif de commande de sortie qui reçoit des données de commande en provenance d'un dispositif de génération de données comprenant au moins deux unités de traitement (11, 21, 31) configurées pour générer les données de commande pour commander un appareil cible de commande sur la base de données d'entrée et commande l'appareil cible de commande,
le dispositif de commande de sortie comportant une unité de commande configurée pour recevoir des données de commande (101) d'un premier système généré sur la base des données d'entrée et des données de code (202) d'un second système codé à l'aide d'un algorithme de codage propre au second système par rapport aux données de commande du second système générées sur la base des données d'entrée, **caractérisé en ce que** ledit dispositif de commande de sortie est conçu pour générer des secondes données de collecte de code, à mettre en relation avec les données de code du second système, à partir des données de commande reçues du premier système conformément au schéma de codage propre au second système, pour vérifier les données de commande du premier système et les données de code du second système en mettant en relation les secondes données de collecte de code et les données de code du second système, et pour déterminer la propriété de transmission des données de commande du premier système pour l'appareil cible de commande sur la base de résultats de vérification de validité des données de commande du premier système et des données de code du second système.

12. Dispositif de commande de sortie selon la revendication 11, dans lequel l'appareil cible de commande est un appareil de signalisation.

13. Dispositif de génération de données comprenant au moins deux unités de traitement configuré pour générer des données de commande pour commander un appareil cible de commande sur la base de données d'entrée, le dispositif de génération de données transmettant les données de commande à un dispositif de commande de sortie qui commande l'appareil de commande cible,
le dispositif de génération de données comportant :
une unité de traitement (11) d'un premier système configurée pour délivrer en sortie des données de commande du premier système générées sur la base des données d'entrée, et
une unité de traitement d'un second système (22) configurée pour délivrer en sortie des données de code du second système codées à l'aide d'un algorithme de codage propre au second système par rapport à des données de commande du second système générées sur la base des données d'entrée, **caractérisé en ce que**
le dispositif de génération de données est conçu pour générer des secondes données de collecte de code, à mettre en relation avec les données de code du second système, à partir des données de commande reçues du premier système conformément au schéma de codage propre au second système, pour vérifier les données de commande du premier système et les données de code du second système en mettant en relation les secondes données de code de collecte et les données de code du second système, et pour déterminer la propriété de transmission des données de commande du premier système pour le dispositif de commande de sortie sur la base de résultats de vérification de validité des données de commande du premier système et des données de code du second système.

14. Dispositif de génération de données selon la revendication 13, dans lequel le dispositif de génération de données peut effectuer une vérification des données de code du second système mais ne peut pas effectuer de génération des données de code ou effectue la vérification des données de code du second système en utilisant au moins l'une quelconque parmi une signature RSA, une signature DSA, et une signature ElGamal elliptique.

15. Dispositif de génération de données comprenant au moins deux unités de traitement configuré pour générer des données de commande pour commander un appareil cible de commande sur la base de données d'entrée, le dispositif de génération de données transmettant les données de commande à un dispositif de commande qui commande l'appareil cible de commande,
le dispositif de génération de données comportant :
une unité de traitement (11) d'un premier système configurée pour délivrer en sortie des données de codes dispersées d'un premier système codées à l'aide d'un algorithme comprenant des informations de dispersion du premier système par rapport à des données de commande du premier système générées sur la base des données d'entrée, et
une unité de traitement (22) d'un second système configurée pour délivrer en sortie des données de code dispersées du second système codées à l'aide d'un algorithme comprenant des informations de dispersion du second système par rapport à des données de commande du second système générées sur la base des données d'entrée,
**caractérisé en ce que** lorsque que à la fois les données de code dispersées du premier système et les données de code dispersées du second système sont valides, le dispositif de génération de données génère, en utilisant les données de code dispersées du premier système et les données de code dispersées du second système, des données de code à l'aide desquelles la validité des données de commande du premier système peut être vérifiée et transmet les données de code et les données de commande du premier système au dispositif de commande, pour déterminer la propriété de transmission des données de commande du premier système dans l'appareil cible de commande sur la base de résultats de vérification de validité des données de commande du premier système et des données de code du second système.

16. Dispositif de génération de données selon la revendication 15, dans lequel le dispositif de génération de données permet de changer les algorithmes comprenant les informations de dispersion au moins à chaque période de commande.

17. Dispositif de génération de données selon l'une quelconque des revendications 13 à 16, dans lequel l'appareil cible de commande est un appareil de signalisation.
